# EUROPÄISCHE PATENTSCHRIFT

(11) **EP 0 502 109 B1**
(45) Veröffentlichungstag und Bekanntmachung des Hinweises auf die Patenterteilung: **28.09.1994**
(21) Anmeldenummer: 91900777.3
(22) Anmeldetag: 14.11.1990
(51) Int. Cl.: C01B 33/32

(54) **VERFAHREN ZUR HYDROTHERMALEN HERSTELLUNG VON KALIUMSILIKATLÖSUNGEN**
PROCESS FOR THE HYDROTHERMAL PRODUCTION OF POTASSIUM SILICATE SOLUTIONS.
PROCEDE D'OBTENTION HYDROTHERMALE DE SOLUTIONS DE SILICATE DE POTASSIUM.

(30) Priorität: 23.11.1989 DE 3938789
(43) Veröffentlichungstag der Anmeldung: 09.09.1992
(73) Patentinhaber: Henkel Kommanditgesellschaft auf Aktien, 40191 Düsseldorf (DE)
(72) Erfinder: NOVOTNY, Rudolf, D-4000 Düsseldorf (DE); HOFF, Alfred, D-4130 Moers-Schwafheim (DE); SCHÜRTZ, Jost, D-5650 Solingen 1 (DE)
(86) Internationale Anmeldenummer: EP9001948
(87) Internationale Veröffentlichungsnummer: WO9108170

(56) Entgegenhaltungen:
- DE-A- 3 902 753
- GB-A- 2 078 701

## Beschreibung

Die vorliegende Erfindung betrifft ein Verfahren zur hydrothermalen Herstellung von Kaliumsilikatlösungen mit hohem SiO₂:K₂O-Molverhältnis durch Umsetzung von Quarzsand mit wäßrigen Kaliumhydroxidlösungen zu einer Kaliumsilikatlösung und anschließender Umsetzung dieses Zwischenproduktes mit einer weiteren kristallinen SiO₂-Modifikation zu einem Produkt mit höherem SiO₂ : K₂O-Verhältnis.

Eine allgemeine Übersicht über die Herstellung von wäßrigen Kaliumsilikatlösungen geben die Monographien von Winnacker und Küchler, Chemische Technologie, Band 3, Anorganische Technologie II, 4. Auflage, 1983, S. 54-63 und Ullmanns Encyklopädie der technischen Chemie, Band 21, 4. Auflage, 1982, S. 409-412.

Von den unter der Bezeichnung "Wasserglas" bekannten Alkalimetallsilikaten finden für technische Zwecke unter anderem Kaliumsilikatlösungen - allgemein als Kaliwasserglas bezeichnet - Verwendung. Derartige Kaliwassergläser weisen überwiegend einen Feststoffgehalt von etwa 28 bis 55 Gew.-% sowie ein Molverhältnis Siliciumdioxid zu Kaliumoxid von 2,0 bis 4,2 : 1 auf. Die Herstellung von Kaliwassergläsern im technischen Maßstab erfolgt im allgemeinen durch Zusammenschmelzen von Quarzsand und Kaliumcarbonat in hierfür geeigneten Öfen (Wannenöfen/Drehrohröfen) bei Temperaturen im Bereich von 1400 bis 1500 °C unter Abspaltung von Kohlendioxid. Die beim Abkühlen erstarrende Schmelze, das Festglas, wird anschließend in einem weiteren Verfahrensschritt unter Verwendung von Druck und erhöhten Temperaturen in Wasser gelöst und die erhaltene Lösung - je nach Qualitätsanforderung - gegebenenfalls filtriert.

Dieses Hochtemperatur-Schmelzverfahren ist jedoch sowohl apparativ als auch hinsichtlich der erforderlichen Energiemengen sehr aufwendig und führt weiterhin zu nicht unerheblichen Emissionen, wie Staub, Stickoxiden und Schwefeloxiden.

Neben diesem in der Technik hauptsächlich angewandten Hochtemperatur-Schmelzverfahren sind ferner hydrothermale Verfahren zur Herstellung wäßriger Kaliumsilikatlösungen bekannt, die in einer Reihe von Patentanmeldungen beschrieben werden.

Diese Verfahren gehen zum einen von amorphem Siliciumdioxid aus, im wesentlichen also von Flugstäuben und natürlich vorkommenden amorphen Siliciumdioxid-Modifikationen.

Die hierbei erhaltenen Verfahrensprodukte sind durch die üblichen Verunreinigungen der Flugstäube und der natürlichen amorphen Siliciumdioxidverbindungen, die als Eingangsstoffe eingesetzt werden, nur von geringer Qualität und können somit nur eingeschränkt für technisch hochwertige Produkte verwendet werden.

Die DE-AS 28 26 432 betrifft ein Verfahren zur Herstellung von Wasserglaslösungen durch Umsetzung von Flugstäuben, die bei Gewinnung von Silicium bzw. von Ferrosilicium-Legierungen anfallen, mit wäßrigen Alkalimetallhydroxidlösungen bei erhöhten Temperaturen und anschließendes Filtrieren der enthaltenen Lösungen, das dadurch gekennzeichnet ist, daß man Flugstaub mit einer 6- bis 15-Gew.-%igen wäßrigen Alkalimetallhydroxidlösung bei Temperaturen von 120 bis 190 °C und einem Druck von 2,9 bis 18,6 bar im Autoklaven behandelt, wobei das Gewichtsverhältnis von Alkalimetallhydroxidlösung zu festem Flugstaub 2 : 1 bis 5 : 1 beträgt. Die Verfahrensprodukte weisen ein Molverhältnis SiO₂ : K₂O von 3,76 : 1 auf. Die als Ausgangsstoffe eingesetzten Flugstäube weisen einen Siliciumgehalt von 89 bis 98 Gew.-% auf, der gemäß den Ausführungsbeispielen stets bei 90 Gew-% liegt; der Rest besteht aus Verunreinigungen.

Die DE-OS 26 09 831 betrifft ein Verfahren zur Aufbereitung von Siliciumdioxid enthaltenden umweltbelastenden Abfallflugstäuben aus der Siliciummetall- und Siliciumlegierungs-Herstellung zu Kieselsäuren oder Silikaten, das dadurch gekennzeichnet ist, daß die folgenden Verfahrensschritte I bis III kombiniert werden:
I Auflösen der Flugstäube in Alkalihydroxidlösungen unter Bildung von Alkalisilikatlösungen;
II Reinigung der Alkalisilikatlösungen von organischen Bestandteilen durch Behandlung mit Aktivkohle und/oder Oxidationsmitteln und Abtrennung des nicht aufschließbaren Rückstandes von der Lösung;
III Umsetzung der Alkalisilikatlösungen mit anorganischen oder organischen Säuren und/oder deren Salzen zwecks weiterer Reinigung.

Die auf diese Weise erhaltenen Alkalisilikatlösungen weisen im allgemeinen ein Molverhältnis SiO₂ : Me₂O im Bereich von 3,3 bis 5,0 : 1 auf.

Die DE-OS 26 19 604 betrifft ein Verfahren zur Herstellung von flüssigem Wasserglas aus amorphem Siliciumdioxid und Alkalihydroxid, das dadurch gekennzeichnet ist, daß Siliciumdioxidstaub in Form von Flugasche, die von den Abgasen von Ferrolegierungs-Industrien und anderen mit Siliciumöfen arbeitenden Industrien abgeschieden worden ist, Alkalihydroxid und Wasser in einem bestimmten Gewichtsverhältnis gemischt werden und daraufhin unter Umrühren auf eine Temperatur zwischen 75 und 100 °C gebracht werden, wonach die erzielte Flüssigkeit abgekühlt wird. Die als Ausgangsstoff für diese Wasserglasherstellung benutzten Siliciumdioxidstäube weisen im allgemeinen einen Siliciumdioxidgehalt von 94 bis 98 Gew.-% auf; der Rest besteht aus Verunreinigungen. Das erhaltene Kaliwasserglas weist ein Molverhältnis SiO₂/K₂O von 3,58 : 1 auf.

Wie die vorstehenden Ausführungen zeigen, liefern die in der Patentliteratur beschriebenen, aus amorphem Siliciumdioxid erhaltenen Wassergläser stets nur Verfahrensprodukte mit minderen Eigenschaften, die einer weiteren Reinigung unterzogen werden müssen.

Der im folgenden beschriebene Stand der Technik betrifft Verfahren zur hydrothermalen Herstellung von Kaliumsilikatlösungen aus kristallinem Siliciumdioxid, also Sand, und Kalilauge, die nach den Verfahren des Standes der Technik allerdings nur bis zu einem SiO₂ : K₂O-Molverhältnis von bis zu 2,75 : 1 umgesetzt werden können.

Die DE-OS 33 13 814 betrifft unter anderem ein Verfahren zur Herstellung einer klaren Lösung eines Kaliumsilikats, dessen Molverhältnis Siliciumdioxid Kaliumoxid gleich 2,75 : 1 ist, durch Aufschluß von kristallinem Siliciumdioxid einer mittleren Korngröße zwischen 0,1 und 2 mm, bei dem eine wäßrige Lösung von Kaliumhydroxid ein Bett aus Siliciumdioxid durchläuft, das in einem senkrechten rohrförmigen Reaktor ohne mechanische Bewegung ausgebildet und von oben nach unten mit Siliciumdioxid und der wäßrigen Lösung des Kaliumhydroxids gespeist wird.

Die belgische Patentschrift 649 739 betrifft ein Verfahren und ein Gerät zur Herstellung von klaren Natriumsilikat-Laugen durch Auflösung eines kieselsäurehaltigen Materials bei hoher Temperatur und unter Druck in wäßriger Ätznatronlauge, das dadurch gekennzeichnet ist, daß das Produkt von dem überschüssigen kieselsäurehaltigen Material und/oder von den unlöslichen verunreinigten Stoffen mittels Filtrierelementen getrennt wird, die in der Nähe des Reaktorbodens angebracht sind, wobei die besagte Filtration vorteilhaft unter den Temperatur- und Druckbedingungen erfolgt, die den Reaktionsbedingungen sehr ähnlich sind. Auf diese Weise sollen auch wäßrige Kaliumsilikatlösungen erhalten werden.

Derartige hydrothermale Verfahren zur Herstellung von Kaliwassergläsern aus Sand und Kalilauge werden auch in der bereits vorstehend zitierten Monographie von Winnacker, Küchler erörtert. Hier heißt es (Seiten 61 und 62), daß sich Kaliwassergläser im Hydrothermalverfahren jedoch nicht herstellen lassen, da beim Aufschluß größere Mengen schwerlösliches (KHSi₂O₅)ₓ entstehen, die auch durch nachträgliches Erhitzen nicht in Lösung gehen.

Aufgrund der vorstehend zitierten Literatur bestand somit ein direktes Vorurteil hinsichtlich der Gewinnung von Kaliumsilikat-Lösungen mit höherem SiO₂/K₂O-Molverhältnis im Hydrothermalverfahren aus Sand, d.h. aus kristallinem SiO₂, und Kalilauge.

Der vorliegenden Erfindung liegt demgegenüber die Aufgabe zugrunde, ein Verfahren zur hydrothermalen Herstellung von Kaliumsilikatlösungen durch Umsetzung von kristallinem Siliciumdioxid mit wäßriger Kaliumhydroxidlösung bereitzustellen, bei welchem als kristallines Siliciumdioxid unter anderem Quarz, d.h. Sand, eingesetzt wird und wobei als Endprodukt Kaliumsilikatlösungen mit Molverhältnissen SiO₂/K₂O von mehr als 2,75 : 1 erzielt werden.

Die erfindungsgemäße Aufgabe wird gelöst durch hydrothermale Umsetzung von Quarz, d.h. Sand, mit wäßrigen Kaliumhydroxidlösungen und anschließender hydrothermaler Umsetzung der hierbei als Zwischenprodukt erhaltenen Kaliumsilikatlösungen mit einem speziell getemperten Quarz.

Die vorliegende Erfindung betrifft somit ein Verfahren zur hydrothermalen Herstellung von Kaliumsilikatlösungen mit hohen SiO₂ : K₂O-Molverhältnissen durch Umsetzung von Quarzsand mit wäßrigen Kaliumhydroxidlösungen bei Temperaturen im Bereich von 150 bis 300 °C und den diesen Temperaturen entsprechenden Drücken von gesättigtem Wasserdampf in einem Druckreaktor, das dadurch gekennzeichnet ist, daß man die hierbei als Zwischenprodukt erhaltenen Kaliumsilikatlösungen, die SiO₂ : K₂O-Molverhältnisse von weniger als 2,75 : 1 aufweisen, anschließend mit einem bei Temperaturen im Bereich von über 1100 °C bis zum Schmelzpunkt getemperten Quarz umsetzt, wobei gleichfalls Temperaturen und Drücke in den genannten Bereichen eingehalten werden.

Das erfindungsgemäße Verfahren ist durch seine einfache Verfahrensführung technisch problemloser zu handhaben und somit kostengünstiger als die technisch aufwendigen, große Energiemengen erfordernden und die Umwelt stark belastenden Verfahren des Standes der Technik, also die Hochtemperatur-Schmelzverfahren mit anschließendem Lösungsschritt.

Gegenüber den Hydrothermalverfahren des Standes der Technik besitzt das erfindungsgemäße Verfahren den Vorteil, daß durch den Einsatz des speziell getemperten Quarzes als kristalline Siliciumdioxid-Komponente in dem nachfolgenden Verfahrensschritt auch Kaliumsilikatlösungen mit SiO₂ : K₂O-Molverhältnissen von mehr als 2,75 : 1 erhalten werden, was, wie vorstehend diskutiert, nach den hydrothermalen Verfahren des Standes der Technik unter Verwendung von Quarz, d.h. Sand, bislang nicht möglich war.

Weiterhin wurde überraschend gefunden, daß aus getempertem Quarz als Siliciumdioxid-Komponente und einer Kaliumsilikatlösung im Rahmen einer Hydrothermalsynthese unter den vorstehend angegebenen Bedingungen schon bei kurzen Reaktionszeiten die direkte Herstellung von wäßrigen Kaliumsilikatlösungen als Endprodukt möglich ist, die ein Molverhältnis SiO₂ : K₂O von mehr als 2,75 : 1 aufweisen.

Schließlich ist es ein besonderer Vorteil des erfindungsgemäßen Verfahrens, daß man auf technisch einfache und sehr wirtschaftliche Art Kaliumsilikatlösungen mit hohen Siliciumdioxid-Kaliumoxid-Molverhältnissen erhält, indem man für die Durchführung der Basisreaktion, also der Umsetzung von Quarz (Sand) mit wäßrigen Kaliumhydroxidlösungen, zunächst die preisgünstigere Siliciumdioxid-Komponente, also Sand, einsetzen kann und nur für eine "Aufkieselungsreaktion" die durch Tempern von Quarz erhaltene, kostenaufwendigere kristalline Siliciumdioxid-Komponente einsetzt. Auf diese Weise kann man aus einer Kaliumsilikatlösung mit einem Molverhältnis SiO₂ : K₂O von weniger als 2,75 : 1 unter Zugabe des getemperten Quarzes als kristalline Siliciumdioxid-Komponente je nach Zusatzmenge des getemperten Quarzes Kaliumsilikatlösungen mit einem SiO₂ : K₂O-Molverhältnis von 2,75 bis 4,2 : 1, vorzugsweise von 3,0 bis 4,0 : 1, herstellen.

Die bei der hydrothermalen Umsetzung von Quarz, d.h. Sand, mit Kaliumhydroxidlösungen zunächst als Zwischenprodukt gewonnenen Kaliumsilikatlösungen können in an sich bekannter Weise nach einem entsprechenden, beliebigen Verfahren des Standes der Technik erhalten werden. Im Sinne der vorliegenden Erfindung ist es bevorzugt, Quarzsand mit wäßriger Kaliumhydroxidlösung in einem Konzentrationsbereich von 10 bis 50 Gew.-%, insbesondere von 15 bis 30 Gew.-%, in einem Druckreaktor umzusetzen, wobei Temperaturen im Bereich von 150 bis 300 °C, insbesondere im Bereich von 200 bis 250 °C, sowie den diesen Temperaturen entsprechenden Drücken von gesättigtem Wasserdampf eingehalten werden.

Die auf diese Weise gewonnenen Kaliumsilikatlösungen weisen SiO₂ : K₂O-Molverhältnisse von weniger als 2,75 : 1 und im allgemeinen Feststoffkonzentrationen im Bereich von 20 bis 55 % auf. Im Sinne der Erfindung werden solche Kaliumsilikatlösungen als Zwischenprodukt bevorzugt, die Feststoffkonzentrationen im Bereich von 23 bis 40 %, insbesondere von 30 bis 38 % aufweisen.

Nach einer bevorzugten Ausführungsform der vorliegenden Erfindung werden die - wie vorstehend beschrieben - als Zwischenprodukt erhaltenen Kaliumsilikatlösungen anschließend mit einem bei Temperaturen im Bereich von 1100 bis 1700 °C unter Zusatz katalytisch wirksamer Mengen an Alkali (z.B. K₂CO₃ / KOH) getemperten Quarz, welcher sich unter diesen Temperaturbedingungen im wesentlichen in Cristobalit umwandelt, im Rahmen der Hydrothermalsynthese unter den vorstehend angegebenen Bedingungen umgesetzt.

Cristobalit ist, wie Quarz, eine Kristallmodifikation des Siliciumdioxids. Dieser wird praktisch ausschließlich synthetisch durch Calcinierung von Quarz hergestellt, indem man Quarzsand bei Temperaturen von ca. 1500 °C unter Zusatz von Katalysatoren (Alkaliverbindungen) kontinuierlich umwandelt. Die dem Quarz zugesetzten Alkalianteile liegen nach der thermischen Behandlung des Quarz/Alkaligemisches in Form von Alkalisilikaten in Cristobalit vor.

Bezüglich näherer Informationen zu Cristobalit wird auf Ullmanns Encyklopädie der technischen Chemie, Band 21, 4. Auflage, 1982, Seiten 439 bis 442, verwiesen.

Im Sinne der Erfindung ist es daher besonders bevorzugt, einen bei Temperaturen im Bereich von 1300 bis 1600 °C unter Zusatz katalytisch wirksamer Mengen an Alkali getemperten Quarz einzusetzen, der sich unter diesen Temperbedingungen im wesentlichen in Cristobalit umwandelt. Besonders vorteilhaft ist es ferner, ein frisch getempertes, noch heißes Cristobalit-Material für das erfindungsgemäße Verfahren zu verwenden.

Bezüglich der Mengen an getempertem Quarz, d.h. insbesondere an Cristobalit, die den als Zwischenprodukt gebildeten Kaliumsilikatlösungen zugesetzt werden, gilt das Folgende: Generell kann die stöchiometrisch erforderliche Menge an Cristobalit, bezogen auf das erwünschte SiO₂ : K₂O-Molverhältnis in der als Endprodukt angestrebten Kaliumsilikatlösung, zugesetzt werden. Darüber hinaus können jedoch auch Überschüsse von bis zu 100 % an Cristobalit, wiederum bezogen auf das Soll-Verhältnis SiO₂ : K₂O im angestrebten Endprodukt, eingesetzt werden. Generell läßt sich die Umsetzung auch mit höheren Überschüssen als 100 % an Cristobalit durchführen; dies ist jedoch im allgemeinen technisch nicht sinnvoll. Im Sinne der Erfindung ist es besonders bevorzugt, die hydrothermale Umsetzung mit einem Überschuß von 0 bis 25 % an getempertem Quarz, d.h. insbesondere Cristobalit, bezogen auf das gewünschte SiO₂ : K₂O-Molverhältnis im Endprodukt, durchzuführen.

Nach einer weiteren bevorzugten Ausführungsform der vorliegenden Erfindung führt man die hydrothermale Herstellung der als Endprodukt angestrebten Kaliumsilikatlösungen mit hohem SiO₂ : K₂O-Molverhältnis in der folgenden Weise durch:
Zunächst werden Quarzsand und wäßrige Kaliumhydroxidlösung (Kalilauge) bei einem bestimmten Temperatur- und Druck-Niveau im Druckreaktor umgesetzt. Der getemperte Quarz, d.h. insbesondere der Cristobalit, welcher der hierbei als Zwischenprodukt gebildeten Kaliumsilikatlösung zugesetzt werden soll, wird auf das gleiche Temperatur- und Druck-Niveau gebracht und so im Druckreaktor mit der darin vorliegenden Kaliumsilikatlösung vereinigt. Anschließend wird die Hydrothermalsynthese unter den gleichen Temperatur- und Druckbedingungen bis zum Erreichen des Soll-Molverhältnisses SiO₂ : K₂O im Bereich von 2,75 bis 4,20 : 1 des Endproduktes weitergeführt.

Andererseits kann man nach Durchführung des ersten Verfahrensschrittes den Druckbehälter zunächst entspannen und bis zu einer praktikablen Arbeitstemperatur sich abkühlen lassen, sodann den - gegebenenfalls auch vorgewärmten - Cristobalit in den Druckbehälter einspeisen und - nach Wiederherstellung der erwünschten Temperatur- und Druckbedingungen - die Hydrothermalsynthese zu Ende führen. Demgegenüber weist die vorstehend geschilderte, bevorzugte Verfahrensführung, die im Hinblick auf die konstanten Temperatur- und Druckbedingungen bei der Hydrothermalsynthese als praktisch einstufig bezeichnet werden kann, besondere wirtschaftliche Vorteile hinsichtlich hoher Raum-/Zeit-Ausbeuten bei minimalem Energieverbrauch auf.

Zur Durchführung des erfindungsgemäßen Verfahrens können generell alle für die Hydrothermalsynthese von Alkalisilikaten gebräuchlichen Reaktoren Verwendung finden. Hierzu gehören z.B. rotierende Löser, stehende Löseranordnungen, Reaktoren mit Rührwerk, Strahlschlaufenreaktoren, Rohrreaktoren und im Prinzip alle Reaktoren, die zur Umsetzung von Feststoffen mit Flüssigkeiten unter Druck geeignet sind. Derartige Reaktoren sind beispielsweise in der DE-OS 30 02 857, DE-OS 34 21 158, DE-AS 28 26 432, BE-PS 649 739, DE-OS 33 13 814 und der DE-PS 968 034 ausführlich beschrieben.

Zur Durchführung der vorstehend geschilderten "einstufigen" Verfahrensvariante ist ein geeigneter separater Druckbehälter erforderlich, in welchem der, der als Zwischenprodukt gebildeten Kaliumsilikatlösung zuzusetzende, getemperte Quarz (Cristobalit) auf das gewünschte Temperatur- und Druck-Niveau gebracht werden kann. Dieser separate Druckbehälter ist mit dem eigentlichen Reaktor entweder durch entsprechende, mit Absperrorganen versehene Leitungen direkt verbunden oder er wird - beispielsweise im Falle rotierender Reaktoren - mit dem eigentlichen Reaktor über entsprechende Leitungen im Bedarfsfall in Verbindung gebracht. Die hier erforderlichen Vor- bzw. Einrichtungen sind dem Fachmann gleichfalls geläufig.

Das Endprodukt - die Kaliumsilikatlösung mit hohem SiO₂ : K₂O-Molverhältnis - wird durch Entspannen aus dem Druckreaktor in einem Vorlagebehälter überführt und kann zur Reinigung noch einer zusätzlichen Filtration unterzogen werden. Hierzu können alle Filtereinrichtungen Verwendung finden, die zur Filtration von Alkalisilikatlösungen dem Fachmann bekannt sind.

Die in der erfindungsgemäßen Weise hergestellten Kaliumsilikatlösungen (Kaliwasserglaslösungen) können für alle üblichen Verwendungszwecke eingesetzt werden, die dem Fachmann bekannt sind und in der einschlägigen Literatur beschrieben werden, beispielsweise als Klebstoffe, als Bindemittel in Farben, Gießereihilfsstoffen, Schweißelektroden, Papierherstellung, Katalysatorträgern, als Komponente in Wasch- und Reinigungsmitteln, sowie als Bestandteile für feuerfeste Materialien.

Der Anmeldungsgegenstand wird durch die nachfolgenden Beispiele näher erläutert, ohne darauf beschränkt zu sein. Für "Hydrothermalverfahren" wird dabei auch die Abkürzung "HT-Verfahren" benutzt.

Als getemperter Quarz wurde in den Ausführungsbeispielen ein durch Tempern bei 1300 bis 1600 °C und Alkalikatalyse erhaltener Cristobalit verwendet.

Als Reaktor für die Durchführung der Versuche diente ein waagerecht angeordneter zylindrischer Druckbehälter aus Stahl mit einer Nickelauskleidung mit einem Volumen von ca. 0,5 l. Der Druckbehälter drehte sich mit einer Drehzahl von ca. 60 Umdrehungen pro Minute um seine horizontale Achse. Die Beheizung erfolgte von außen über einen auf Reaktionstemperatur aufgeheizten Wärmeträger.

Kaliumsilikatlösungen mit einem SiO₂ : K₂O-Molverhältnis von 2,0 wurden aus Sand und Kalilauge hergestellt und anschließend unter Zusatz von Cristobalit in den Druckreaktor eingefüllt und bei 215 bzw. 225 °C und Reaktionszeiten zwischen 20 und 120 min zu Kaliumsilikatlösungen mit einem SiO₂ : K₂O-Molverhältnis von 2,75 bis 4,20 : 1 umgesetzt.

Einzelheiten hierzu sind den nachstehenden Beispielen 1 bis 8 zu entnehmen. Beispiel 3 betrifft die Herstellung einer Kaliumsilikatlösung mit einem Molverhältnis SiO₂ : K₂O von 2,0 : 1; die Beispiele 5 bis 8 betreffen die Umsetzung einer solchen "Basis"-Kaliumsilikatlösung, d.h. einer solchen mit Molverhältnissen SiO₂ : K₂O < 2,75 : 1, mit Cristobalit.

In einer besonders wirtschaftlichen Form kann das Verfahren der Herstellung der Basiskaliumsilikatlösung mit einem Molverhältnis < 2,75 : 1 direkt kombiniert werden mit der Anschlußreaktion der Umsetzung dieser Kaliumsilikatlösung unter Zusatz von Cristobalit zu der als Endprodukt gewünschten Kaliumsilikatlösung mit einem SiO₂ : K₂O-Molverhältnis von 2,75 bis 4,2 : 1. Dieser Prozeßablauf wird nachfolgend beschrieben:

Die Stoffmengen (Sand bzw. Cristobalit und Kalilauge) werden über Wägevorrichtungen erfaßt. Die Rohstoffe Sand und Kalilauge werden in den Reaktor eingefüllt, dieser dann verschlossen und in Rotation versetzt. Danach wird das Reaktionsgemisch auf eine Reaktionstemperatur von ca. 215 °C aufgeheizt und bei dieser Temperatur belassen. Nach einer Reaktionszeit von 30 min bei dieser Temperatur wird der Reaktor zum Stillstand gebracht.

Aus einem anschließend an den Reaktor angeflanschten, mit getempertem Quarz (Cristobalit) gefüllten Druckbehälter, der auf den gleichen Druck wie der Reaktionsbehälter gebracht wird, wird die erforderliche Menge Cristobalit in den Reaktor, der die zuvor gebildete Kaliumsilikatlösung mit einem Molverhältnis SiO₂ : K₂O von ca. 2,0 : 1 enthält, eindosiert. Danach wird der unter Druck stehende Vorratsbehälter wieder geschlossen, entspannt und vom Reaktor abgetrennt. Die zugesetzte Cristobalitmenge entspricht dem zusätzlichen SiO₂-Anteil, der zum Erreichen eines Molverhältnisses SiO₂ : K₂O von 4,0 : 1 in der als Endprodukt angestrebten Kaliumsilikatlösung erforderlich ist. Danach wird der Reaktor weitere 15 bis 60 min bei Reaktionstemperatur belassen. Die Aufarbeitung der Kaliumsilikat-Lösung kann dann anschließend entweder über ein Sedimentationsverfahren zur Abtrennung von Feststoffen oder - bei höheren Anforderungen an die Klarheit der Lösung - über ein Filter vorgenommen werden.

Es ist jedoch grundsätzlich möglich, die unter Druck stehende flüssige Phase der Kaliumsilikatlösung in einen zweiten, gegebenenfalls vorgeheizten Reaktionsbehälter zu überführen, in dem die berechnete Cristobalitmenge vorgelegt wurde, und die Reaktion dort zu Ende zu führen.

In einer besonderen Ausführungsform kann der Hydrothermal-Prozeß auch bei relativ hohen Feststoffkonzentrationen im Reaktor ablaufen, da unter Reaktionsbedingungen, beispielsweise 215 °C / 20 bar, die im Reaktor befindliche Kaliumsilikatlösung einen für den Prozeß ausreichenden Viskositätsbereich aufweist. Nach Abschluß der Reaktion kann dann zusätzlich Wasser entweder
- unter Druck direkt in den Reaktor oder
- in die Ausblaseleitung zu einem Vorlagebehälter während des Ausblasevorganges
eingespeist werden, so daß die über die Ausblaseleitung in den Vorlagebehälter gelangte Kaliumsilikatlösung in der Weise ausreichend verdünnt wird, daß in der Vorlage bei Temperaturen von ca. 100 °C die Kaliumsilikatlösung vor der weiteren Aufarbeitung durch Sedimentation/Filtration eine fließfähige, ausreichend niedrigviskose Konsistenz aufweist.

### Beispiele 1 bis 4

Diese Beispiele betreffen die Herstellung einer "Basis"-Kaliumsilikatlösung, die als Ausgangsstoff für die weitere Umsetzung mit getempertem Quarz dient.

49 g Sand und 87,06 g einer 25 Gew.-%igen Kalilauge wurden in den waagerecht angeordneten zylindrischen Druckbehälter eingefüllt und dieser druckfest verschlossen. Nach Reaktionszeiten von jeweils 15, 30, 60 und 120 min bei 215 °C/20 bar wurde der Reaktor abgekühlt und die gebildete Kaliumsilikat-Lösung analysiert. Sie wies folgende SiO₂ : K₂O-Molverhältnisse auf (Tabelle 1).

**Tabelle 1**

| Versuch Nr. | Reakt.-Temp. °C | Reakt.-Zeit min | in Lösung | | Mol-Verh. SiO₂ : K₂O |
|---|---|---|---|---|---|
| | | | % SiO₂ | % K₂O | |
| 1 | 215 | 15 | 6,44 | 19,64 | 0,51 |
| 2 | 215 | 30 | 12,32 | 18,40 | 1,05 |
| 3 | 215 | 60 | 21,34 | 16,62 | 2,02 |
| 4 | 215 | 120 | 25,03 | 15,72 | 2,50 |

Die Kaliumsilikatlösung aus Beispiel 3 wurde weiter mit Cristobalit umgesetzt, wie in den Beispielen 5 bis 8 der Tabelle 2 näher angegeben wird.

Hierbei wurde der Kaliumsilikatlösung die erforderliche zusätzliche Cristobalitmenge zugesetzt, um ein SiO₂ : K₂O-Molverhältnis von 4,0 zu erreichen. Zusätzlich wurde ein Cristobalitüberschuß von 10 %, bezogen auf das Soll-Verhältnis von 4,0 zugegeben.

**Tabelle 2**

| Versuch Nr. | Reakt.-Temp. °C | Reakt.-Zeit min | in Lösung | | Gew.-Verh. SiO₂:K₂O | Mol-Verh. SiO₂:K₂O |
|---|---|---|---|---|---|---|
| | | | %SiO₂ | %K₂O | | |
| 5 | 215 | 15 | 28,30 | 14,40 | 1,96 | 3,06 |
| 6 | 215 | 30 | 33,00 | 14,32 | 2,31 | 3,61 |
| 7 | 215 | 60 | 32,00 | 12,94 | 2,46 | 3,89 |
| 8 | 225 | 30 | 35,80 | 14,00 | 2,56 | 4,00 |

Die Beispiele 5 bis 7 und insbesondere 8 zeigen, daß die Umsetzung von Kaliumsilikatlösungen mit einem Molverhältnis SiO₂ : K₂O < 2,0 : 1 mit der getemperten kristallinen SiO₂-Komponente schon bei kurzen Reaktionszeiten (30 min) und relativ niedrigen Reaktionstemperaturen (< 230 °C) zu Kaliumsilikatlösungen mit Molverhältnissen SiO₂ : K₂O zwischen 3,6 und 4,0 : 1 führen.

## Patentansprüche

1. Verfahren zur hydrothermalen Herstellung von Kaliumsilikatlösungen mit hohen SiO₂ : K₂O-Molverhältnissen, durch hydrothermale Umsetzung von Quarzsand mit wäßrigen Kaliumhydroxidlösungen bei Temperaturen im Bereich von 150 bis 300 °C und den diesen Temperaturen entsprechenden Drücken von gesättigtem Wasserdampf in einem Druckreaktor, dadurch gekennzeichnet, daß man die hierbei erhaltenen Kaliumsilikatlösungen, die SiO₂ : K₂O-Molverhältnisse von weniger als 2,75 : 1 aufweisen, anschließend mit einem bei Temperaturen im Bereich von über 1100 °C bis zum Schmelzpunkt getemperten Quarz umsetzt, wobei gleichfalls Temperaturen und Drücke in den genannten Bereichen eingehalten werden.

2. Verfahren nach Anspruch 1, dadurch gekennzeichnet, daß die als Endprodukt erhaltenen Kaliumsilikatlösungen ein SiO₂ : K₂O-Molverhältnis von 2,75 bis 4,20 : 1, vorzugsweise 3,0 bis 4,0 : 1, aufweisen.

3. Verfahren nach Anspruch 1 oder 2, dadurch gekennzeichnet, daß man die im ersten Reaktionsschritt erhaltene Kaliumsilikatlösung mit einem bei Temperaturen im Bereich von 1100 bis 1700 °C, insbesondere im Bereich von 1300 bis 1600 °C, unter Zusatz katalytisch wirksamer Mengen an Alkali getemperten Quarz, umsetzt.

4. Verfahren nach einem der Ansprüche 1 bis 3, dadurch gekennzeichnet, daß man die im ersten Reaktionsschritt erhaltene Kaliumsilikatlösung mit der stöchiometrisch erforderlichen Menge an getempertem Quarz, bezogen auf das erwünschte SiO₂ : K₂O-Molverhältnis im Endprodukt, umsetzt.

5. Verfahren nach einem der Ansprüche 1 bis 3, dadurch gekennzeichnet, daß man die im ersten Reaktionsschritt erhaltene Kaliumsilikatlösung mit einem Überschuß von bis zu 100 % an getempertem Quarz, bezogen auf das erwünschte SiO₂ : K₂O-Molverhältnis im Endprodukt, umsetzt.

6. Verfahren nach einem der Ansprüche 1 bis 3, dadurch gekennzeichnet, daß man die im ersten Reaktionsschritt erhaltene Kaliumsilikatlösung mit einem Überschuß von 0 bis 25 % an getempertem Quarz, bezogen auf das erwünschte SiO₂ : K₂O-Molverhältnis im Endprodukt, umsetzt.

7. Verfahren nach einem der Ansprüche 1 bis 6, dadurch gekennzeichnet, daß man die hydrothermalen Umsetzungen bei Temperaturen im Bereich von 200 bis 250 °C und den diesen Temperaturen entsprechenden Drücken von gesättigtem Wasserdampf durchführt.

8. Verfahren nach einem der Ansprüche 1 bis 7, dadurch gekennzeichnet, daß man im ersten Reaktionsschritt Quarzsand mit wäßriger Kaliumhydroxidlösung einer Konzentration von 10 bis 50 Gew.-%, insbesondere 15 bis 30 Gew.-%, umsetzt.

9. Verfahren nach einem der Ansprüche 1 bis 8, dadurch gekennzeichnet, daß man den ersten Reaktionsschritt bei einem bestimmten Temperatur- und Druck-Niveau in einem Druckreaktor durchführt, den zuzusetzenden getemperten, noch heißen Quarz auf das gleiche Temperatur- und Druck-Niveau bringt, die im ersten Reaktionsschritt gebildete Kaliumsilikat-Lösung mit dem getemperten Quarz bei Einhaltung des gewählten Temperatur- und Druck-Niveaus vereinigt und anschließend die hydrothermale Umsetzung bis zum Erreichen des erwünschten SiO₂ : K₂O-Molverhältnisses im Endprodukt unter den gleichen Temperatur- und Druckbedingungen weiterführt.

## Claims

1. Process for the hydrothermal production of potassium silicate solutions with high SiO₂ : K₂O molar ratios, by the hydrothermal reaction of quartz sand with aqueous potassium hydroxide solutions at temperatures in the range of 150 to 300°C and the pressures of saturated water vapor corresponding to these temperatures in a pressure reactor, characterized in that the potassium silicate solutions obtained hereby, which have SiO₂ :K₂O molar ratios of less than 2.75 : 1, are then reacted with a quartz tempered at temperatures in the range of over 1100°C up to melting point, such that the temperatures and pressures are also kept in the ranges named.

2. Process according to claim 1, characterized in that the potassium silicate solutions obtained as the end product have a SiO₂ :K₂O molar ratio of 2.75 to 4.20 : 1, preferably 3.0 to 4.0 : 1.

3. Process according to claim 1 or 2, characterized in that the potassium silicate solution obtained in the first stage of the reaction is reacted with a quartz tempered at temperatures in the range of 1100 to 1700°C, particularly in the range of 1300 to 1600°C, with the addition of catalytically active quantities of alkali.

4. Process according to one of claims 1 to 3, characterized in that the potassium silicate solution obtained in the first stage of the reaction is reacted with the stoichiometrically required quantity of tempered quartz, relative to the desired SiO₂ : K₂O molar ratio in the end product.

5. Process according to one of claims 1 to 3, characterized in that the potassium silicate solution obtained in the first stage of the reaction is reacted with an excess of up to 100 % of tempered quartz, relative to the desired SiO₂ : K₂O molar ratio in the end product.

6. Process according to one of claims 1 to 3, characterized in that the potassium silicate solution obtained in the first stage of the reaction is reacted with an excess of 0 to 25 % of tempered quartz, relative to the desired SiO₂ : K₂O molar ratio in the end product.

7. Process according to one of claims 1 to 6, characterized in that the hydrothermal reactions are carried out at temperatures in the range of 200 to 250 °C and at the pressures of saturated water vapor corresponding to these temperatures.

8. Process according to one of claims 1 to 7, characterized in that in the first stage of the reaction, quartz sand is reacted with aqueous potassium hydroxide solution of a concentration of 10 to 50 % by weight, in particular 15 to 30 % by weight.

9. Process according to one of claims 1 to 8, characterized in that the first stage of the reaction is carried out at a certain temperature and pressure level in a pressure reactor, the tempered, still hot quartz to be added is brought to the same temperature and pressure level, the potassium silicate solution formed in the first stage of the reaction is combined with the tempered quartz, the selected temperature and pressure level being maintained, and then the hydrothermal reaction is continued under the same temperature and pressure conditions until the desired SiO₂ : K₂O molar ratio in the end product is achieved.

## Revendications

1. Procédé de confection hydrothermique de solutions de silicate de potassium présentant un rapport molaire SiO₂:K₂O élevé, par mise en réaction hydrothermique dans un réacteur à pression de sable silicieux avec des solutions aqueuses d'hydroxyde de potassium, à des températures comprises dans l'intervalle de 150 à 300 °C et sous des pressions de vapeur d'eau saturée correspondant à ces températures, qui est caractérisé en ce que l'on met ensuite en réaction les solutions de silicate de potassium, qui présentent un rapport molaire SiO₂:K₂O inférieur à 2,75:1, avec un quartz attrempé aux températures de la plage s'étendant de (plus de) 1100 °C au point de fusion, les températures et les pressions étant également maintenues dans les intervalles cités.

2. Procédé selon la revendication 1, caractérisé en ce que les solutions de silicate de potassium obtenues comme produit final présentent un rapport molaire SiO₂:K₂O de 2,75 à 4,20:1, de préférence de 3,0 à 4,0:1.

3. Procédé selon la revendication 1 ou 2, caractérisé en ce que l'on fait réagir la solution de silicate de potassium lors de la première étape de réaction avec un quartz attrempé à des températures situées dans la plage de 1100 à 1700 °C, en particulier dans l'intervalle de 1300 à 1600 °C, sous adjonction de quantités actives comme catalyseur de composés de métaux alcalins.

4. Procédé selon une des revendications 1 à 3, caractérisé en ce que l'on fait réagir la solution de silicate de potassium obtenue lors de la première étape de réaction avec la quantité stoechiométriquement nécessaire de quartz attrempé, par rapport au rapport molaire SiO₂:K₂O souhaité dans le produit final.

5. Procédé selon une des revendications 1 à 3, caractérisé en ce que l'on fait réagir la solution de silicate de potassium obtenues lors de la première étape de réaction avec un excès allant jusqu'à 100 % de quartz attrempé, par rapport au rapport molaire SiO₂:K₂O souhaité dans le produit final.

6. Procédé selon une des revendications 1 à 3, caractérisé en ce que l'on fait réagir la solution de silicate de potassium obtenue lors de la première étape de réaction avec un excès de 0 à 25 % de quartz attrempé, par rapport au rapport molaire SiO₂:K₂O souhaité dans le produit final.

7. Procédé selon une des revendications 1 à 6, caractérisé en ce que l'on opère les réactions hydrothermiques à des températures comprises dans l'intervalle de 200 à 250 °C et sous des pressions de vapeur saturée correspondant à ces températures.

8. Procédé selon une des revendications 1 à 7, caractérisé en ce que l'on fait réagir dans la première étape de réaction du sable silicieux avec une solution aqueuse d'hydroxyde de potassium présentant une concentration de 10 à 50 % en poids, en particulier de 15 à 30 % en poids.

9. Procédé selon une des revendications 1 à 8, caractérisé en ce que l'on opère la première étape de réaction dans un réacteur à pression à un niveau de température et de pression déterminé, on porte le quartz attrempé à additionner, encore chaud au même niveau de température et de pression, on réunit la solution de silicate de potassium formée lors de la première étape de réaction avec le quartz attrempé, en respectant le niveau de température et de pression choisi, et on poursuit ensuite la réaction hydrothermique dans les mêmes conditions de température et de pression jusqu'à l'obtention du rapport molaire SiO₂:K₂O souhaité dans le produit final.
